# EUROPEAN PATENT APPLICATION

(11) **EP 4 481 545 A1**
(43) Date of publication of application: **25.12.2024**
(21) Application number: 23795372.4
(22) Date of filing: 25.04.2023
(51) Int. Cl.: G06F 3/0482

(54) **METHOD AND APPARATUS FOR ADJUSTING INTERFACE LAYOUT, AND DEVICE, STORAGE MEDIUM AND PROGRAM PRODUCT**

(30) Priority: 29.04.2022 CN 202210473257
(71) Applicant: BEIJING YOUZHUJU NETWORK TECHNOLOGY CO. LTD., Beijing 101299 (CN)
(72) Inventor: YAO, Jiaqi, Beijing 100028 (CN); FANG, Ting, Beijing 100028 (CN); SHI, Kejian, Beijing 100028 (CN)
(74) Representative: Dentons UK and Middle East LLP
(86) International application number: PCT/CN2023/090476
(87) International publication number: WO 2023/207939

(57) **Abstract**

A method and apparatus for adjusting an interface layout, and a device, a storage medium and a program product. The method comprises: in response to a selection operation on an object to be adjusted in a display interface, displaying, in the display interface, a position adjustment area corresponding to said object (S101); in response to an adjustment operation on the position adjustment area, determining a target position parameter (S102); and on the basis of the target position parameter, adjusting said object to a target position corresponding to the target position parameter in the display interface (S103). After a selection operation is performed on an object, a position adjustment area is displayed, and the object is further adjusted to a target position on the basis of an operation on the position adjustment area, that is, the position of the object is adjusted by means of an operation on a position adjustment interface, such that the operation is convenient, and the position of the object can be adjusted anytime and anywhere.

## Description

### CROSS-REFERENCE TO RELATED APPLICATIONS

This application is based on a CN application No.202210473257.3, filed on April 29, 2022, and entitled "Method for adjusting interface layout, Apparatus, Device, Storage Medium and Program Product", and claims its priority. The disclosure of this CN application as a whole is incorporated into the present application herein by reference.

### TECHNICAL FIELD

The present disclosure relates to the technical field of data processing, in particular to a method for adjusting interface layout, apparatus, device, storage medium and program product.

### BACKGROUND

With the rapid development of Internet technology and intelligent terminals, intelligent terminals are more and more widely used in people's lives and work, and with the continuous development of intelligent terminals, a plurality of objects can be displayed in the display interface of terminals. For example, objects include information cards, display data, etc.

In the process of displaying objects using the display interface of the terminal, it is necessary to adjust the positions of the plurality of objects laid out in the interface. In the related methods for adjusting interface layout, it is necessary to move the position of the object through a direction adjustment button on the physical device. For example, the up, down, left and right keys of the remote controller or keyboard are used to control the object to move in the corresponding direction.

### SUMMARY

In a first aspect, an embodiment of the present disclosure provides a method for adjusting interface layout, comprising:
in response to a selection operation on an object to be adjusted in a display interface, displaying a position adjustment area corresponding to the object to be adjusted in the display interface;
determining a target position parameter in response to an adjustment operation on the position adjustment area;
adjusting the object to be adjusted to a target position corresponding to the target position parameter in the display interface based on the target position parameter.

In a second aspect, an embodiment of the present disclosure provides an apparatus for adjusting interface layout, comprising:
a position adjustment area display module, configured to, in response to a selection operation on an object to be adjusted in a display interface, display a position adjustment area corresponding to the object to be adjusted;
a target position parameter determination module, configured to determine a target position parameter in response to the operation on the position adjustment area;
a position adjustment module, configured to adjust the object to be adjusted to a target position in the display interface based on the target position parameter.

In a third aspect, an embodiment of the present disclosure provides an electronic device, comprising:
one or more processors;
a storage means for storing one or more programs;
in response to the one or more programs being executed by the one or more processors, causing the one or more processors to implement the method for adjusting interface layout according to any one of the first aspects.

In a fourth aspect, an embodiment of the present disclosure provides a computer-readable storage medium, on which a computer program is stored which, when executed by a processor, implements the method for adjusting interface layout according to any one of the first aspects.

In a fifth aspect, an embodiment of the present disclosure provides a computer program product comprising a computer program or instructions which, when executed by a processor, implement the method for adjusting interface layout according to any one of the first aspects.

### BRIEF DESCRIPTION OF THE DRAWINGS

The above and other features, advantages, and aspects of embodiments of the present disclosure will become more apparent by referring to the following detailed description when taken in combination with the accompanying drawings. Throughout the drawings, the same or similar reference signs refer to the same or similar elements. It should be understood that the drawings are schematic and that the originals and elements are not necessarily drawn to scale.
FIG. 1 is a flow diagram of a method for adjusting interface layout in an embodiment of the present disclosure;
FIG. 2 is a schematic display diagram of a data list in an embodiment of the present disclosure;
FIG. 3 is a schematic display diagram of a data adjustment interface in an embodiment of the present disclosure;
FIG. 4a is a schematic trigger diagram of a first swap button in an embodiment of the present disclosure;
FIG. 4b is a schematic diagram of a data list after data sequence adjustment in an embodiment of the present disclosure;
FIG. 5a is a schematic trigger diagram of a second swap button in an embodiment of the present disclosure;
FIG. 5b is a schematic diagram of a data list after data sequence adjustment in an embodiment of the present disclosure;
FIG. 6 is a schematic display diagram of a position parameter input area in an embodiment of the present disclosure;
FIG. 7a is a schematic diagram of a top button in an embodiment of the present disclosure;
FIG. 7b is a schematic diagram of data display after topping in an embodiment of the present disclosure;
FIG. 7c is a schematic diagram of a top cancel button in an embodiment of the present disclosure;
FIG. 8 is a schematic structural diagram of an apparatus for adjusting interface layout in an embodiment of the present disclosure;
FIG. 9 is a schematic structural diagram of an electronic device in an embodiment of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be embodied in various forms and should not be construed as limited to the embodiments set forth herein, but rather these embodiments are provided for a more complete and thorough understanding of the present disclosure. It should be understood that the drawings and embodiments of the present disclosure are for illustration purposes only and are not intended to limit the scope of the disclosure.

It should be understood that the various steps recited in the method embodiments of the present disclosure may be performed in a different order, and/or performed in parallel. Moreover, the method embodiments may include additional steps and/or omit performing the illustrated steps. The scope of the present disclosure is not limited in this respect.

The term "comprise" and variations thereof as used herein are intended to be open-ended, i.e., "comprise but not limited to". The term "based on" is "based at least in part on". The term "one embodiment" means "at least one embodiment"; the term "another embodiment" means "at least one additional embodiment"; the term "some embodiments" means "at least some embodiments". Relevant definitions for other terms will be given in the following description.

It should be noted that the terms "first", "second", and the like in the present disclosure are only used for distinguishing different devices, modules or units, and are not used for limiting the order of functions performed by the devices, modules or units or interdependence thereof.

It should be noted that references to "a" or "a plurality of" mentioned in the present disclosure are intended to be illustrative rather than limiting, and those skilled in the art will appreciate that unless otherwise clearly indicated in the context, they should be understood as "one or more".

The names of messages or information exchanged between devices in the embodiments of the present disclosure are for illustrative purposes only, and are not intended to limit the scope of the messages or information.

The method, apparatus, device, storage medium and program product for adjusting interface layout provided by the embodiment of the present disclosure can be applied to any interface layout adjustment scenario.

The related method for adjusting interface layout requires additional physical input devices, which leads to inconvenient operation, and when the remote controller or keyboard is left behind, the data sequence cannot be adjusted in time.

In order to solve the above technical problem, the embodiments of the present disclosure provide a method and apparatus for adjusting interface layout, device, storage medium and program product, which realize adjustment of the position of the object through operation on a position adjustment interface. The operation is convenient, and the object position can be adjusted anytime and anywhere.

The interface layout adjustment scene can be adjustment of the interface in an audio and video playback application in the device. For example, based on the pre-arranged order of playing a plurality of audio and video items, the method for adjusting interface layout provided by the embodiment of the present disclosure can be adopted to adjust the order among the audio and video items, so as to realize the adjustment of the playing order.

The interface layout adjustment scene can also be an adjustment scene of the position of each application program or software in the display desktop of the device, or an adjustment scene for the position of each card in the web interface. For example, the interface layout adjustment scene can be an adjustment scene of the position of each product card in the store page interface, that is, the display interface is the store page interface, and the object to be adjusted is the product card.

Next, the method for adjusting interface layout proposed by the embodiment of this application will be introduced in detail with the accompanying drawings.

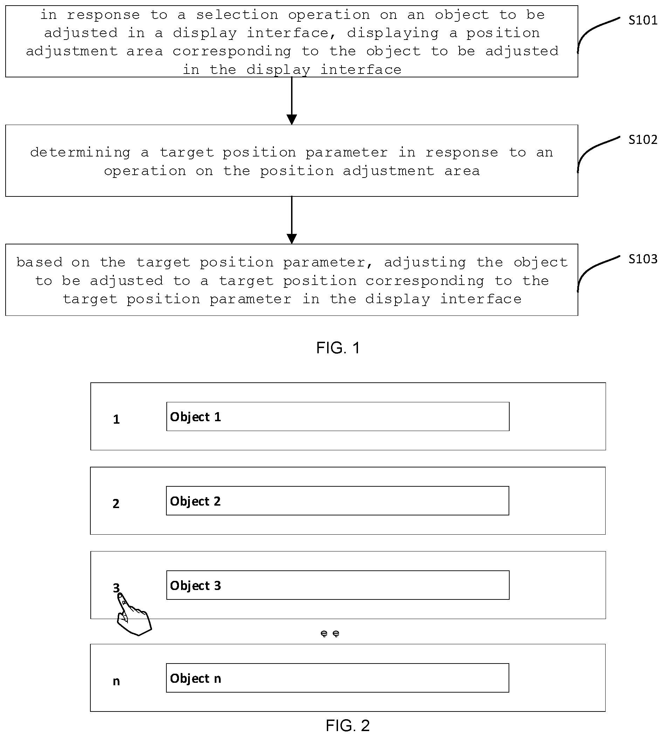

FIG. 1 is a flow diagram of a method for adjusting interface layout in an embodiment of the present disclosure. This embodiment can be applied to the case of adjusting the position of an object in a display interface. The method for adjusting interface layout can be executed by an apparatus for adjusting interface layout, which can be implemented in software and/or hardware, and can be configured in an electronic device.

For example, the electronic device may be an adjustment terminal, a fixed terminal or a portable terminal. For example, the electronic device can be a mobile phone, a site, a unit, a device, a multimedia computer, a multimedia tablet, an Internet node, a communicator, a desktop computer, a laptop computer, a notebook computer, a netbook computer, a tablet computer, a personal communication system (PCS) device, a personal navigation device, a personal digital assistant (PDA), an audio/video player, a digital camera/camcorder, a positioning device, a television receiver, a radio broadcast receiver, an e-book device, a game device or any combination thereof, and also includes accessories and peripherals of these devices or any combination thereof.

For another example, the electronic device may be a server, wherein the server may be a physical server or a cloud server, and the server may be one server or a server cluster.

As shown in FIG. 1, the method for adjusting interface layout provided by the embodiment of the present disclosure mainly includes steps S101 to S103.

Step S101, in response to a selection operation on an object to be adjusted in a display interface, displaying a position adjustment area corresponding to the object to be adjusted in the display interface.

In some embodiments of the present disclosure, a plurality of objects are included in the display interface, which may be an audio card in an audio display interface, or a video playing card in a video display interface, or a search result card in a result display interface. The object can also be a data in a data list. In some embodiments, the plurality of objects in the display interface are arranged and displayed according to a preset rule. The preset rule can be that a plurality of objects are arranged in a column or a row; it can also be that a plurality of objects are arranged in multiple rows and columns, or that a plurality of objects are disorderly distributed in the display interface.

In some embodiments of the present disclosure, the position of each object in the display interface has its corresponding position parameter, wherein the position parameters are in one to one correspondence to the positions in the interface. The position of the object in the display interface is determined by the position parameter corresponding to the object. The position parameter corresponding to the object can be set according to the actual situation. The object to be adjusted can be an object whose position in the current display interface needs to be adjusted.

In some embodiments of the present disclosure, the selection operation on the object to be adjusted in the display interface can be any one or more of the click operation, touch operation, hover operation, etc. of the current data (i.e., the object), which is not limited in this embodiment.

In some embodiments of the present disclosure, the position adjustment area can be displayed in the form of a floating frame or an information card, which is not specifically limited in this embodiment.

In some embodiments of the present disclosure, the position adjustment area corresponding to the object may be that multiple objects correspond to one position adjustment area. For example, no matter which object is selected as the object to be adjusted, the position adjustment area is displayed in the form of a floating frame at a specified position of the interface.

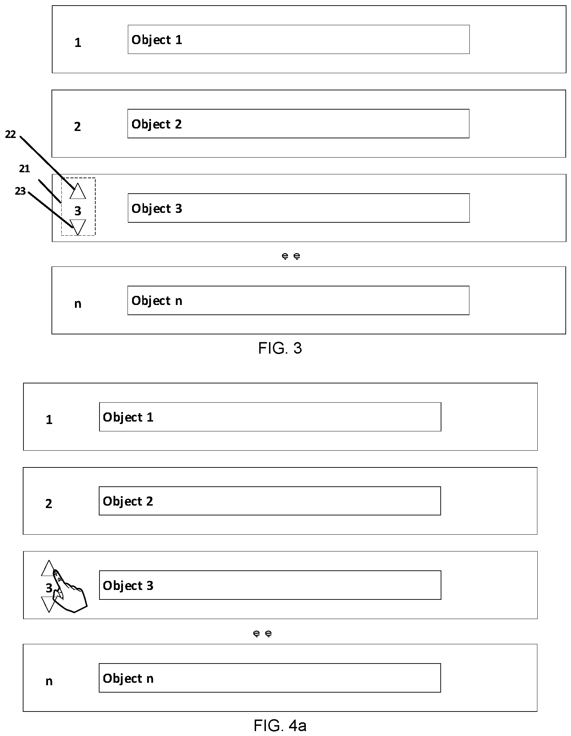

In some embodiments of the present disclosure, the position adjustment area corresponding to the object may be that each object corresponds to its own position adjustment area, that is, the objects and the position adjustment areas are in one-to-one correspondence. For example, as shown in FIG. 2, a plurality of objects arranged in sequence are displayed in the display interface. Each object displays its corresponding position parameter in the parameter display area. For example, as shown in FIG. 3, in response to a selection operation on an object 3, the object 3 is taken as an object to be adjusted, and its corresponding position adjustment area 21 is displayed at a preset position corresponding to the object 3.

In some embodiments, a position adjustment area corresponding to each object is set for the each object, and after the object to be adjusted is selected, its corresponding position adjustment area 21 is displayed.

Step S102, determining a target position parameter in response to an operation on the position adjustment area.

For example, the target position parameter can be understood as a parameter corresponding to the target position to which the object to be adjusted will be adjusted. The target position parameter can be determined by a specific operation on the position adjustment area.

In some embodiments of the present disclosure, operations on the position adjustment area include clicking, touching, inputting and other operations on the position adjustment area.

In some embodiments of the present disclosure, at least one function control is set in the position adjustment area; determining the target position parameter in response to an operation on the position adjustment area comprises: determining the target position parameter corresponding to the object to be adjusted in response to an operation on the function control.

In some embodiments, a plurality of function controls are set in the position adjustment area, and each function control is used to respond to and receive the user's operation, and determine the target position parameter of the object to be adjusted based on the function corresponding to the function control. For example, function controls can include: a forward adjustment control, a backward adjustment control, a parameter input control, a top adjustment control and so on. Different function controls implement different functions based on the programs they encapsulate.

In some embodiments, as shown in FIG. 3, a forward adjustment control 22, a backward adjustment control 23 and a position parameter are displayed in the position adjustment area 21.

In some embodiments, a plurality of function controls are set in the position adjustment area to implement different functions, that is, the position of the object in the display interface can be adjusted in various ways by operating different function controls in the position adjustment area.

Step S103, based on the target position parameter, adjusting the object to be adjusted to a target position corresponding to the target position parameter in the display interface.

In some embodiments, each position in the display interface has its one-to-one corresponding position parameter, and the position parameter is bound to the position, and the corresponding relationship between the position parameter and the position will not be changed due to the adjustment of the object. The above-mentioned position parameter can be expressed by Chinese and English characters, character strings, coordinate systems, etc. In some embodiments, the explanation is made by taking the position parameter being in the form of Arabic numerals.

As shown in FIG. 3, in response to the target position parameter corresponding to the object 3 being 2, and the position corresponding to the position parameter 2 being the second position arranged from top to bottom, the object 3 is adjusted to the second position.

The embodiment of the present disclosure provides a method for adjusting interface layout, comprising: in response to a selection operation on an object to be adjusted in a display interface, displaying a position adjustment area corresponding to the object to be adjusted in the display interface; determining a target position parameter in response to an adjustment operation on the position adjustment area; adjusting the object to be adjusted to a target position corresponding to the target position parameter in the display interface based on the target position parameter. According to the embodiment of the present disclosure, after a selection operation on the object, a position adjustment area is displayed, and the object is further adjusted to the target position based on the operation on the position adjustment area, that is, the adjustment of the position of the object is realized through the operation on an position adjustment interface. The operation is convenient, and the adjustment of the position of the object can be realized anytime and anywhere.

In some embodiments of the present disclosure, the function control includes a forward adjustment control; determining the corresponding target position parameter in response to an operation on the function control comprises: in response to a trigger operation on the forward adjustment control, subtracting a first value from the position parameter corresponding to the object to be adjusted to obtain a first value; determining the first value as the target position parameter.

In some embodiments, the forward adjustment control can be understood as a function control to realize the forward adjustment of the object to be adjusted. The preset value can be set according to the actual situation. For example, the preset value can be any one of 1, 2 or 3. There is a one-to-one correspondence between the preset value and the forward adjustment control.

In some embodiments of the present disclosure, the function control includes at least one forward adjustment control. For example, in response to the function control including a forward adjustment control, a preset value corresponding to the forward adjustment control is determined, and the preset value is subtracted from the position parameter corresponding to the object to be adjusted to obtain a first value. For example, in response to the preset value corresponding to the forward adjustment control being 1, in response to the trigger operation on the forward adjustment control, the position parameter corresponding to the object to be adjusted is subtracted by 1 to obtain a first value.

In response to the function control including a plurality of forward adjustment controls, each forward adjustment control corresponds to a different preset value. In some embodiments, a first forward adjustment control corresponds to a first preset value, a second forward adjustment control corresponds to a second preset value, and a third forward adjustment control corresponds to a third preset value. In response to the user's trigger operation on different forward adjustment controls, a preset value corresponding to the forward adjustment control on which a trigger operation is performed by the user is obtained, and the preset value is subtracted from the position parameter corresponding to the object to be adjusted to obtain a first value. For example, in response to a trigger operation on the third forward adjustment control, the corresponding third preset value is obtained. And the third preset value is subtracted from the position parameter corresponding to the object to be adjusted to obtain the first value.

In some embodiments, in response to the trigger operation on the forward adjustment control, a preset value is subtracted from the position parameter corresponding to the object to be adjusted to obtain a first value, and the first value is determined as a target position parameter, meanwhile, the method further comprises: determining a target position parameter of a first object, and adjusting the first object to its corresponding target position parameter. The first object is an object corresponding to any position parameter between the position parameter corresponding to the object to be adjusted and the target position parameter, and the first object includes an object corresponding to the target position parameter. For example, in response to the preset value being 1, the first object is an object corresponding to the target position parameter.

In some embodiments, determining a target position parameter of the first object comprises: adding one to the position parameter corresponding to the first object to obtain a third value, taking the third value as the target position parameter of the first object, and adjusting the first object to a position corresponding to the target position parameter corresponding to the first object. In this embodiment, the first object is controlled to move backward by one position in turn.

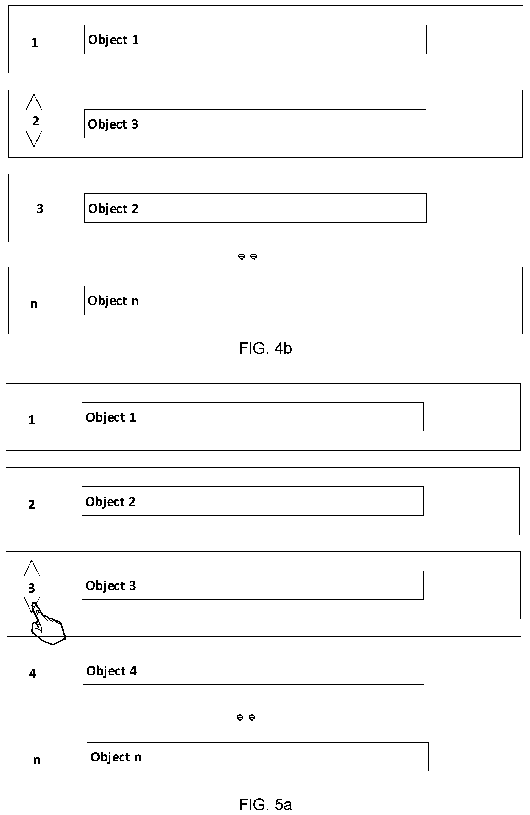

For example, take object 3 as the object to be adjusted and the preset value being 1 as an example. As shown in FIG. 4a, in response to a trigger operation on the forward adjustment control 22, it is determined that the position parameter corresponding to the object to be adjusted is 3, and the position parameter 3 corresponding to the object to be adjusted is subtracted by 1 to obtain a target position parameter 2, and the object is adjusted to a position corresponding to the position parameter 2, as shown in FIG. 4b; at the same time, the object 2 corresponding to the target position parameter 2 is determined as the first object, the position parameter 2 is added by 1 to get a target position parameter 3 corresponding to the object 2, and the object 2 is adjusted to a position corresponding to the position parameter 3, as shown in FIG. 4b.

In the embodiment of the present disclosure, by the trigger operation on the forward adjustment control, the object to be adjusted can be quickly moved forward by one or more positions to quickly adjust the position of the object.

In some embodiments of the present disclosure, the function control includes a backward adjustment control; determining a target position parameter corresponding to the object to be adjusted in response to an operation on the function control comprises: in response to a trigger operation on the backward adjustment control, adding a preset value to a position parameter corresponding to the object to be adjusted to obtain a second value; determining the second value as the target position parameter.

In this embodiment, the backward adjustment control can be understood as a function control to realize the backward adjustment of the object to be adjusted. The preset value can be set according to the actual situation, for example, the preset value can be any one of 1, 2 or 3. There is a one-to-one correspondence between the preset value and the backward adjustment control.

In some embodiments of the present disclosure, the function control includes at least one backward adjustment control. For example, in response to the function control including a backward adjustment control, a preset value corresponding to the backward adjustment control is determined, and the present value is subtracted from the position parameter corresponding to the object to be adjusted to obtain a second value. For example, in response to the preset value corresponding to the backward adjustment control being 1, in response to the trigger operation on the backward adjustment control, the position parameter corresponding to the object to be adjusted is added with 1 to obtain a second value.

In response to the function control including a plurality of backward adjustment controls, the plurality of backward adjustment controls correspond to a different preset value. In some embodiments, a first backward adjustment control corresponds to a first preset value, a second backward adjustment control corresponds to a second preset value, and a third backward adjustment control corresponds to a third preset value. In response to the user's trigger operation on different backward adjustment controls, a preset value corresponding to the backward adjustment control on which the user's trigger operation is performed is obtained, and the preset value is subtracted from the position parameter corresponding to the object to be adjusted to obtain a second value. For example, in response to a trigger operation on the third backward adjustment control, a third preset value corresponding to the third backward adjustment control is obtained. And the position parameter corresponding to the object to be adjusted is added with the third preset value to obtain a second value.

In some embodiments, in response to the trigger operation on the backward adjustment control, a preset value is added to the position parameter corresponding to the object to be adjusted to obtain a second value, and the second value is determined as a target position parameter, meanwhile, the method further comprises: determining a target position parameter of the second object, and adjusting the second object to its corresponding target position parameter. The second object is an object corresponding to any position parameter between the position parameter corresponding to the object to be adjusted and the target position parameter, and the second object includes an object corresponding to the target position parameter. For example, in response to the preset value being 1, the second object is an object corresponding to the target position parameter.

In some embodiments, determining the target position parameter of the second object comprises: subtracting one from the position parameter corresponding to the second object to obtain a third value, taking the third value as the target position parameter of the second object, and adjusting the second object to a position corresponding to its corresponding target position parameter. In this embodiment, the second object is controlled to move forward by one position in turn.

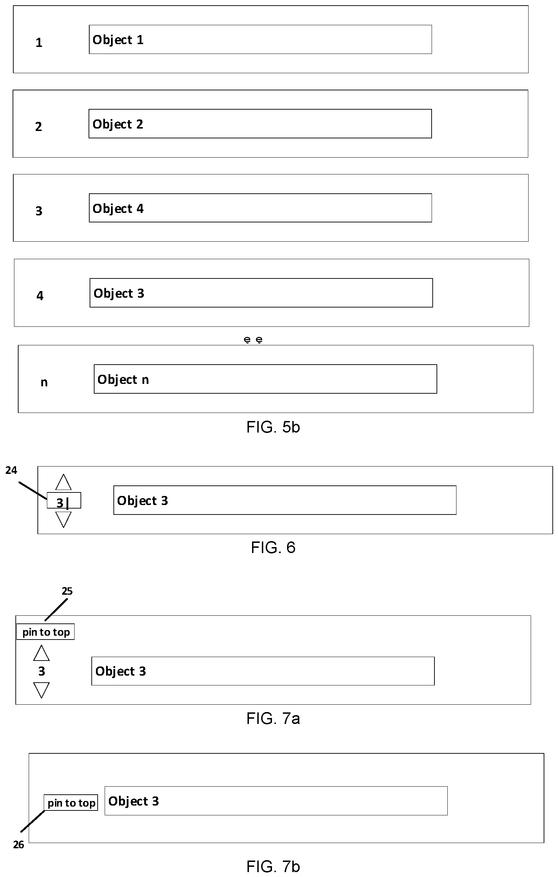

For example, take object 3 as the object to be adjusted and the preset value being 1 as an example. As shown in FIG. 5a, in response to a trigger operation on the backward adjustment control 23, it is determined that the position parameter corresponding to the object to be adjusted is 3, and the position parameter 3 corresponding to the object to be adjusted is added by 1 to obtain a target position parameter 4, and the object is adjusted to a position corresponding to the position parameter 4, as shown in FIG. 5b; at the same time, the object 4 corresponding to the target position parameter 4 is determined as the second object, and the position parameter 4 is subtracted by 1 to get a target position parameter 3 corresponding to the object 4, and the object 4 is adjusted to a position corresponding to the position parameter 3, as shown in FIG. 5b.

In the embodiment of the present disclosure, by the trigger operation on the backward adjustment control, the object to be adjusted can be quickly moved backward by one or more positions to quickly adjust the position of the object.

In some embodiments of the present disclosure, after the object position adjustment, the position adjustment area corresponding to the object to be adjusted may or may not be displayed, which is not specifically limited in this embodiment.

In some embodiments of the present disclosure, the method for adjusting interface layout further comprises: in response to the object to be adjusted being located at the top of the display interface, setting the forward adjustment control corresponding to the object to be adjusted to an operation prohibition state; in response to the object to be adjusted being located at the last position of the display interface, setting the backward adjustment control corresponding to the object to be adjusted to an operation prohibition state.

In the embodiment of the present disclosure, the object to be adjusted being located at the top of the display interface may include that the position parameter corresponding to the object to be adjusted is 1.

In response to the object to be adjusted being located at the top of the display interface, it indicates that the position of the object to be adjusted can no longer be adjusted forward. At this time, the forward adjustment control is set to the operation prohibition state, that is, the device no longer responds to any operation on the forward adjustment control.

In the embodiment of the present disclosure, the object to be adjusted being located at the last position of the display interface may include that the position parameter corresponding to the object to be adjusted is the total number of positions in the display interface or the total number of objects in the display interface.

In the embodiment of the present disclosure, in response to the object to be adjusted being located at the last position of the display interface, it indicates that the position of the object to be adjusted can no longer be adjusted backward. At this time, the backward adjustment control is set to the operation prohibition state, that is, the device no longer responds to any operation on the backward adjustment control.

In some embodiments, setting to the operation prohibition state can be prompted by a specific display mode. For example, the backward adjustment control can be set to a gray state to prompt the user that the device will not respond after clicking the backward adjustment control.

In the above embodiment, in response to the object to be adjusted being in the top or last position, some function controls are set to the operation prohibition state, and the user's operation is prohibited, so as to avoid the interface confusion caused by the cyclic transposition of the objects.

In some embodiments of the present disclosure, the function control includes a parameter input control; determining the corresponding target position parameter in response to an operation on the function control comprises: in response to an input operation on the parameter input control, determining an input value corresponding to the input operation as the target position parameter.

In some embodiments, the parameter input control may be a parameter input box.

In some embodiments of the present disclosure, the input value may be a specific value manually entered by a user.

In some embodiments of the present disclosure, a parameter selection control is displayed in the display interface in response to a trigger operation on the parameter input control, and an input value input by a user is obtained in response to a trigger operation on the parameter selection control by the user.

In some embodiments of the present disclosure, the method further comprises: before determining an input value corresponding to the input operation as the target position parameter, determining whether the input value is greater than a maximum value of the parameter, and in response to the input value being greater than the maximum value of the parameter, displaying a prompt message to prompt the user that the position parameter does not exist; and in response to the input value being less than the maximum value of the parameter, determining the input value corresponding to the input operation as the target position parameter.

In the above embodiment, the position of the object is adjusted by inputting the position parameter, so that the user can conveniently and quickly adjust the object to the target position.

In some embodiments of the present disclosure, the method further comprises: before obtaining the input parameter corresponding to the input operation in response to the input operation on the parameter input control, displaying the parameter input control in response to a trigger operation on a parameter display control in the position adjustment area.

In the above embodiment, the parameter display control is used to display the position parameter corresponding to each position, for example, the position of the number 3 shown in FIG. 6. As shown in FIG. 6, in response to the trigger operation on the parameter display control in the position adjustment area, a parameter input control 24 is displayed on the parameter display control, and the parameter input by the user in the parameter input control 24 is received, and the input value is taken as the target position parameter, and the object to be adjusted is adjusted to the target position corresponding to the target position parameter. For example, in response to the target position parameter input by the user being 7, the object to be adjusted will be adjusted to a position corresponding to the position parameter 7 in the display interface.

In the above embodiment, the parameter input control and the parameter display control are superimposed, which can make the display interface more concise.

In some embodiments of the present disclosure, the method further comprises: after determining the input parameter corresponding to the input operation as the target position parameter, for an object corresponding to any first position parameter between the position parameter corresponding to the object to be adjusted and the target position parameter, processing the first position parameter according to a preset processing mode to obtain a second position parameter; adjusting the object corresponding to the first position parameter to a position corresponding to the second position parameter in the display interface.

In some embodiments, the first position parameter refers to each position parameter between the position parameter of the object to be adjusted and the target position parameter. For example, the position parameter of the object to be adjusted is 3 and the target position parameter is 7. At this time, the first position parameter can include position parameter 4, position parameter 5 and position parameter 6. The second position parameter can be understood as the target position parameter corresponding to the object corresponding to the first position parameter after the position of the object to be adjusted is adjusted.

In the embodiment of the present disclosure, each object corresponding to the first position parameter is processed according to preset processing mode to determine the target position parameter corresponding the each object corresponding to the first position parameter, and the object corresponding to the first position parameter is adjusted to the target position corresponding the object.

In the embodiment of the present disclosure, after the position of the object to be adjusted is adjusted, other objects needing to be adjusted in the display interface are adjusted according to the preset processing mode, so as to avoid the confusion of the downward layout in the display interface.

In some embodiments of the present disclosure, the first position parameter is processed according to the preset processing mode to obtain a second position parameter, comprising: in response to the position parameter corresponding to the object to be adjusted being greater than the target position parameter, adding one to the first position parameter to obtain a third value, and determining the third value as the second position parameter; in response to the position parameter corresponding to the object to be adjusted being smaller than the target position parameter, subtracting one from the first position parameter to obtain a fourth value, and determining the fourth value as the second position parameter.

For example, the position parameter of the object to be adjusted is 3 and the target position parameter is 7. The first position parameter can include position parameter 4, position parameter 5 and position parameter 6. At this time, in response to the position parameter corresponding to the object to be adjusted being less than the target position parameter, position parameter 4 is subtracted by 1 to obtain a value 3, the value 3 is taken as the second position parameter, and the object corresponding to position parameter 4 is adjusted to a position corresponding to position parameter 3. Position parameter 5 is subtracted by 1 to get a value 4, the value 4 is taken as the second position parameter, and the object corresponding to position parameter 5 is adjusted to a position corresponding to position parameter 4. Position parameter 6 is subtracted by 1 to get a value 5, the value 5 is taken as the second position parameter, and the object corresponding to position parameter 6 is adjusted to a position corresponding to the position parameter 5. Position parameter 7 is subtracted by 1 to get a value 6, the value 6 is taken as the second position parameter, and the object corresponding to position parameter 7 is adjusted to a position corresponding to the position parameter 6.

In the embodiment of the present disclosure, in response to the position parameter corresponding to the object to be adjusted being less than the target position parameter, the objects corresponding to the first position parameter are adjusted forward by one position sequentially.

For example, the position parameter of the object to be adjusted is 8 and the target position parameter is 5. The first position parameter can include position parameter 6 and position parameter 7. At this time, the position parameter corresponding to the object to be adjusted is greater than the target position parameter. Position parameter 7 is added by 1 to obtain a value 8, and the value 8 is taken as the second position parameter, and the object corresponding to the position parameter 7 is adjusted to a position corresponding to position parameter 8. Position parameter 6 is added by 1 to get a value 7, the value 7 is taken as the second position parameter, and the object corresponding to position parameter 6 is adjusted to a position corresponding to position parameter 7. Position parameter 5 is added by 1 to get a value 6, the value 6 is taken as the second position parameter, and the object corresponding to the position parameter 5 is adjusted to a position corresponding to position parameter 6.

In the embodiment of the present disclosure, in response to the position parameter corresponding to the object to be adjusted being less than the target position parameter, the objects corresponding to the first position parameter are adjusted backward by one position sequentially.

In the embodiment of the present disclosure, after the position of the object to be adjusted is adjusted, other objects needing to be adjusted are sequentially adjusted by one position, so that the order among other objects will not be disturbed except the position of the object to be adjusted.

In some embodiments of the present disclosure, the function control includes a top adjustment control; determining the corresponding target position parameter in response to an operation on the function control comprises: determining a first preset parameter as the target position parameter in response to a trigger operation on the top adjustment control, wherein the first preset parameter is a position parameter corresponding to a top area in the display interface.

In this embodiment, the position adjustment area also includes a top adjustment control. The top area may refer to a data display area before the data position with the position parameter of 1, for example, the position parameter of the top area may be set to 0 or a special character.

As shown in FIG. 7a, a top adjustment control 25 is displayed in the position adjustment area, and the first preset parameter is determined as the target position parameter in response to a trigger operation on the top adjustment control 25. For example, the position parameter corresponding to the top area is character a, and the character a is determined as the target position parameter in response to the trigger operation on the top adjustment control 25.

In some embodiments, the objects whose position parameters are smaller than the position parameters corresponding to the the objects to be adjusted are adjusted forward by one position sequentially. The specific adjustment method can refer to the description in the above embodiment, and is not limited in this embodiment.

For example, as shown in FIG. 7b, after the object to be adjusted is adjusted to the top area, the position parameter corresponding to the object to be adjusted is hidden and not displayed, and top prompt information 26 is displayed in the parameter display control to prompt the user that the object is a top object.

In this embodiment, a way to set the object to the top is provided, which can conveniently and quickly adjust the object to the top area.

In some possible embodiments, the function control includes a top cancel control; determining the corresponding target position parameter in response to an operation on the function control comprises: determining a second preset parameter as the target position parameter in response to a trigger operation on the top cancel control, wherein the second preset parameter is a position parameter corresponding to the object to be adjusted in response to the top adjustment control being triggered for the last time.

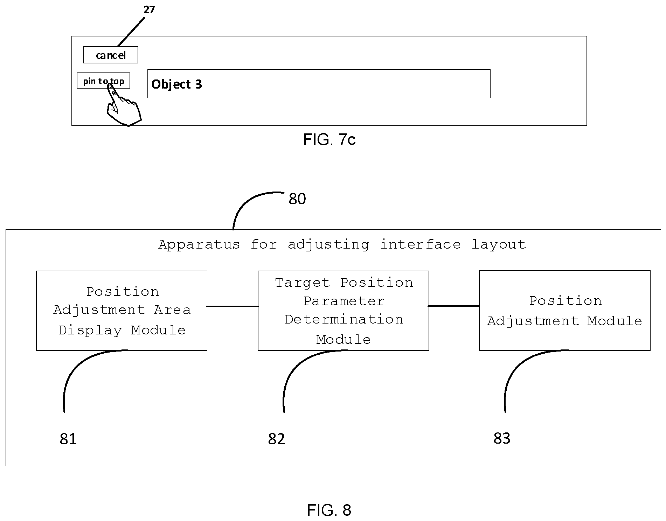

In this embodiment, as shown in FIG. 7c, in response to a trigger operation on the parameter display control, a top cancel control 27 is displayed above the parameter display control, and the top setting of the object to be adjusted is cancelled in response to a trigger operation on the top cancel control 27. The object to be adjusted is adjusted to the position parameter corresponding to the object to be adjusted in response to the top adjustment control being triggered for the last time. For example, the position parameter corresponding to the object to be adjusted before the last topping is 3, and after the topping is cancelled, the object to be adjusted is adjusted to a position corresponding to the position parameter 3. After canceling the topping, the objects corresponding to position parameters greater than 3 are adjusted backward by one position sequentially.

In this embodiment, based on the operation on the top cancel control, the data top setting can be quickly cancelled, and the interface layout mode before topping can be restored, thus improving the data sorting efficiency.

FIG. 8 is a schematic structural diagram of an apparatus for adjusting interface layout in an embodiment of the present disclosure. This embodiment can be applied to the case of adjusting the position of an object in a display interface. The apparatus for adjusting interface layout can be implemented in software and/or hardware, and can be configured in an electronic device.

As shown in FIG. 8, an apparatus for adjusting interface layout 80 provided by the embodiment of the present disclosure mainly includes a position adjustment area display module 81, a target position parameter determination module 82 and a position adjustment module 83.

The position adjustment area display module 81 is configured to, in response to a selection operation on an object to be adjusted in a display interface, display a position adjustment area corresponding to the object to be adjusted.

The target position parameter determination module 82 is configured to determine a target position parameter in response to an operation on the position adjustment area.

The position adjustment module 83 is configured to adjust the object to be adjusted to a target position in the display interface based on the target position parameter.

In some possible embodiments, at least one function control is set in the position adjustment area; the target position parameter determination module 82 is specifically configured to determine the corresponding target position parameter in response to the operation on the function control.

In some possible embodiments, the function control includes a forward adjustment control; the target position parameter determination module 82 comprises: a forward adjustment control response unit, configured to subtract a preset value from a position parameter corresponding to the object to be adjusted to obtain a first value in response to a trigger operation on the forward adjustment control; a target position parameter determination unit configured to determine the first value as the target position parameter.

In some possible embodiments, the function control includes a backward adjustment control; the target position parameter determination module 82 comprises: a backward adjustment control response unit, configured to add a preset value to a position parameter corresponding to the object to be adjusted to obtain a second value in response to a trigger operation on the backward adjustment control; a target position parameter determination unit, configured to determine the second value as the target position parameter.

In some possible embodiments, the apparatus further comprises: an operation prohibition setting module for setting the forward adjustment control corresponding to the object to be adjusted to an operation prohibition state in response to the object to be adjusted being at the top of the display interface; and set the backward adjustment control corresponding to the object to be adjusted to an operation prohibition state in response to the object to be adjusted being located at the last position of the display interface.

In some possible embodiments, the function control includes a parameter input control;

The target position parameter determination module 82 comprises: a parameter input control response unit, configured to, in response to an input operation on the parameter input control, determine an input value corresponding to the input operation as the target position parameter.

In some possible embodiments, the target position parameter determination module 82 further comprises: a parameter display control response unit configured to display the parameter input control in response to a trigger operation on the parameter display control in the position adjustment area before obtaining the input parameter corresponding to the input operation in response to the input operation on the parameter input control.

In some possible embodiments, the target position parameter determination module 82 further comprises: a second position parameter determination unit configured to, after determining the input parameter corresponding to the input operation as the target position parameter, for an object corresponding to any first position parameter between the position parameter corresponding to the object to be adjusted and the target position parameter, process the first position parameter according to a preset processing mode to obtain a second position parameter; a position adjustment module further configured to adjust the object corresponding to the first position parameter to a position corresponding to the second position parameter in the display interface.

In some possible embodiments, the second position parameter determination unit is specifically configured to add one to the first position parameter to obtain a third value in response to the position parameter corresponding to the object to be adjusted being greater than the target position parameter, and determine the third value as the second position parameter; and subtract one from the first position parameter to obtain a fourth value in response to the position parameter corresponding to the object to be adjusted being smaller than the target position parameter, and determine the fourth value as the second position parameter.

In some possible embodiments, the function control includes a top adjustment control; the target position parameter determination module 82 further comprises a top adjustment control response unit configured to determine a first preset parameter as a target position parameter in response to a trigger operation on the top adjustment control, wherein the first preset parameter is a position parameter corresponding to the top area in the display interface.

In some possible embodiments, the function control includes a top cancel control; the target position parameter determination module 82 further comprises a top cancel control response unit configured to determine a second preset parameter as a target position parameter in response to a trigger operation on the top cancel control, wherein the second preset parameter is a position parameter corresponding to the object to be adjusted in response to the top adjustment control being triggered for the last time.

The apparatus for adjusting interface layout provided by the embodiment of the present disclosure can execute the steps executed in the method for adjusting interface layout provided by the method embodiments of the present disclosure, and has the execution steps and beneficial effects, which will not be described here.

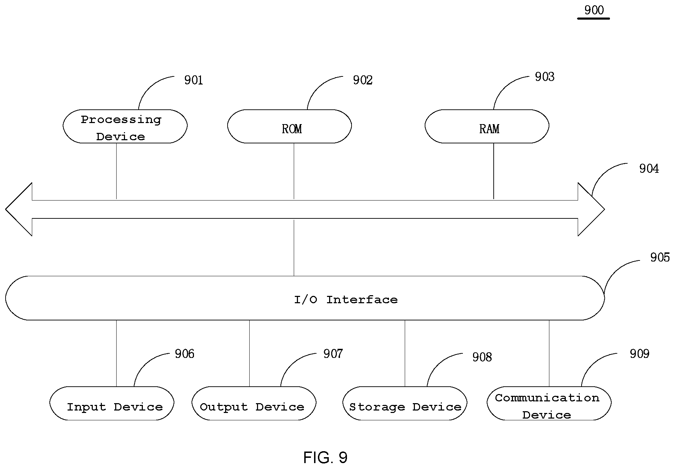

FIG. 9 is a schematic structural diagram of an electronic device in an embodiment of the present disclosure. Referring specifically to FIG. 9, there is shown a schematic structural diagram suitable for implementing an electronic device 900 in an embodiment of the present disclosure. The electronic device 900 in the embodiment of the present disclosure may include, but is not limited to, an adjustment terminal such as an adjustment phone, a notebook computer, a digital broadcast receiver, a PDA (personal digital assistant), a PAD (tablet), a PMP (portable multimedia player), a vehicle terminal (e.g., a car navigation terminal), a wearable terminal device, and the like, and a fixed terminal such as a digital TV, a desktop computer, a smart home device, and the like. The electronic device shown in FIG. 9 is only an example, and should not bring any limitation to the functions and the scope of the application of the embodiments of the present disclosure.

As shown in FIG. 9, the electronic device 900 may include a processing device (such as a central processor, a graphics processor, etc.) 901, which may perform various appropriate actions and processes according to a program stored in a read-only memory (ROM)902 or a program loaded from a storage device 908 into a random access memory (RAM)903 to implement the method for adjusting interface layout according to the embodiments of the present disclosure. In the RAM 903, various programs and data required for the operation on the terminal device 900 are also stored. The processing device 901, the ROM 902 and the RAM 903 are connected to each other through a bus 904. An input/output (I/O) interface 905 is also connected to the bus 904.

Generally, the following devices can be connected to the I/O interface 905: an input device 906 including, for example, a touch screen, touch pad, keyboard, mouse, camera, microphone, accelerometer, gyroscope, etc.; an output device 907 including, for example, a Liquid Crystal Display (LCD), speaker, vibrator, etc.; a storage device 908 including, for example, magnetic tape, hard disk, etc.; and a communication device 909. The communication device 909 may allow the terminal device 900 to communicate with other devices wirelessly or by wire to exchange data. While FIG. 9 illustrates a terminal device 900 having various means, it is to be understood that it is not required to implement or provide all of the means shown. More or fewer means may be alternatively implemented or provided.

In particular, the processes described above with reference to the flow diagrams may be implemented as computer software programs, according to the embodiment of the present disclosure. For example, an embodiment of the present disclosure includes a computer program product comprising a computer program carried on a non-transitory computer readable medium, the computer program containing program code for performing the method illustrated by the flow diagram, thereby realizing the method for adjusting interface layout as described above. In such an embodiment, the computer program may be downloaded and installed from the network via the communication device 909, or installed from the storage device 908, or installed from the ROM 902. When executed by the processing device 901, the computer program performs the above-described functions defined in the method of the embodiments of the present disclosure.

It should be noted that the computer readable medium of the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium may be any tangible medium that contains, or stores a program for use by or in combination with an instruction execution system, apparatus, or device. In contrast, in the present disclosure, a computer readable signal medium may include a data signal propagated in a baseband or as a part of a carrier wave, wherein a computer readable program code is carried therein. Such a propagated data signal may take a variety of forms, including, but not limited to, an electro-magnetic signal, an optical signal, or any suitable combination thereof. A computer-readable signal medium may be any computer readable medium other than a computer-readable storage medium and the computer-readable signal medium can communicate, propagate, or transport a program for use by or in combination with an instruction execution system, apparatus, or device. Program code embodied on a computer-readable medium may be transmitted using any appropriate medium, including but not limited to: electrical wires, optical cables, RF (radio frequency), etc., or any suitable combination thereof.

In some embodiments, the client and the server can communicate using any currently known or future-developed network protocol, such as HTTP (HyperText Transfer Protocol), and may be interconnected to digital data communication (e.g., a communication network) of any form or medium. Examples of communication networks include a local area network ("LAN"), a wide area network ("WAN"), the Internet (e.g., the Internet), and a peer-to-peer network (e.g., ad hoc peer-to-peer network), as well as any currently known or future developed network.

The computer readable medium may be included in the above-mentioned electronic device; or it may exist alone without being assembled into the electronic device.

The computer readable medium carries one or more programs, which, when executed by the terminal device, cause the terminal device to: in response to a selection operation on an object to be adjusted in the display interface, display a position adjustment area corresponding to the object to be adjusted in the display interface; determine a target position parameter in response to an adjustment operation on the position adjustment area; adjust the object to be adjusted to a target position corresponding to the target position parameter in the display interface based on the target position parameter.

Optionally, when the above one or more programs are executed by the terminal device, the terminal device can also perform other steps described in the above embodiment.

Computer program code for carrying out operations of the present disclosure may be written in one or more programming languages or a combination thereof, the programming languages include, but are not limited to an object oriented programming language such as Java, Smalltalk, C++, and also include conventional procedural programming languages, such as the "C" programming language, or similar programming languages. The program code can be executed entirely on the user's computer, partly on the user's computer, as an independent software package, partly on the user's computer and partly executed on a remote computer, or entirely on the remote computer or server. In the scenario involving a remote computer, the remote computer may be connected to the user's computer through any type of network, including a Local Area Network (LAN) or a Wide Area Network (WAN), or may be connected to an external computer (for example, through the Internet using an Internet service provider).

The flow diagrams and block diagrams in the figures illustrate the architecture, functionality, and operation that are possibly implemented by systems, methods and computer program products according to various embodiments of the present disclosure. In this regard, each block in the flow diagrams or block diagrams may represent a module, program segment, or portion of code, which comprises one or more executable instructions for implementing the specified logical function(s). It should also be noted that, in some alternative implementations, the functions noted in the blocks may occur in an order different from that noted in the figures. For example, two blocks shown in succession may, in fact, be executed substantially concurrently, or they may sometimes be executed in a reverse order, depending upon the function involved. It will also be noted that each block of the block diagrams and/or flow diagrams, and a combination of blocks in the block diagrams and/or flow diagrams, can be implemented by special purpose hardware-based systems that perform the specified functions or operations, or combinations of special purpose hardware and computer instructions.

The units described in the embodiments of the present disclosure may be implemented by software or hardware. Wherein the name of a unit does not in some cases constitute a limitation on the unit itself.

The functions described herein above may be performed, at least in part by one or more hardware logic components. For example, without limitation, exemplary types of hardware logic components that may be used include Field Programmable Gate Arrays (FPGAs), Application Specific Integrated Circuits (ASICs), Application Specific Standard Products (ASSPs), Systems on a Chip (SOCs), Complex Programmable Logic Devices (CPLDs), and so forth.

In the context of this disclosure, a machine-readable medium may be a tangible medium that can contain, or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, the present disclosure provides a method for adjusting interface layout, comprising: in response to a selection operation on an object to be adjusted in a display interface, displaying a position adjustment area corresponding to the object to be adjusted in the display interface; determining a target position parameter in response to an adjustment operation on the position adjustment area; adjusting the object to be adjusted to a target position corresponding to the target position parameter in the display interface based on the target position parameter.

According to one or more embodiments of the present disclosure, the present disclosure provides a method for adjusting interface layout, wherein at least one function control is set in the position adjustment area; determining a target position parameter in response to an operation on the position adjustment area comprises: determining a target position parameter corresponding to the object to be adjusted in response to an operation on the function control.

According to one or more embodiments of the present disclosure, the present disclosure provides a method for adjusting interface layout, wherein the function control includes a forward adjustment control; determining a target position parameter corresponding to the object to be adjusted in response to an operation on the function control comprises: in response to a trigger operation on the forward adjustment control, subtracting a preset value from the position parameter corresponding to the object to be adjusted to obtain a first value; determining the first value as the target position parameter.

According to one or more embodiments of the present disclosure, the present disclosure provides a method for adjusting interface layout, wherein the function control includes a backward adjustment control; determining a target position parameter corresponding to the object to be adjusted in response to an operation on the function control comprises: in response to a trigger operation on the backward adjustment control, adding a preset value to the position parameter corresponding to the object to be adjusted to obtain a second value; determining the second value as the target position parameter.

According to one or more embodiments of the present disclosure, the present disclosure provides a method for adjusting interface layout, wherein the method further comprises: in response to the object to be adjusted being located at the top of the display interface, setting the forward adjustment control corresponding to the object to be adjusted to an operation prohibition state; in response to the object to be adjusted being located at the last position of the display interface, adjusting the backward adjustment control corresponding to the object to be adjusted to an operation prohibition state.

According to one or more embodiments of the present disclosure, the present disclosure provides an method for adjusting interface layout, wherein the function control includes a parameter input control; determining a corresponding target position parameter in response to an operation on the function control comprises: in response to an input operation on the parameter input control, determining an input value corresponding to the input operation as the target position parameter.

According to one or more embodiments of the present disclosure, the present disclosure provides a method for adjusting interface layout, wherein, the method further comprises: before obtaining an input parameter corresponding to the input operation in response to an input operation on the parameter input control, displaying the parameter input control in response to a trigger operation on a parameter display control in the position adjustment area.

According to one or more embodiments of the present disclosure, the present disclosure provides a method for adjusting interface layout, wherein the method further comprises: after determining an input parameter corresponding to the input operation as a target position parameter, for an object corresponding to any first position parameter between the position parameter corresponding to the object to be adjusted and the target position parameter, processing the first position parameter according to a preset processing mode to obtain a second position parameter; adjusting the object corresponding to the first position parameter to a position corresponding to the second position parameter in the display interface.

According to one or more embodiments of the present disclosure, the present disclosure provides a method for adjusting interface layout, wherein processing the first position parameter according to a preset processing mode to obtain a second position parameter comprises: in response to the position parameter corresponding to the object to be adjusted being greater than the target position parameter, adding one to the first position parameter to obtain a third value, and determining the third value as the second position parameter; in response to the position parameter corresponding to the object to be adjusted being smaller than the target position parameter, subtracting one from the first position parameter to obtain a fourth value, and determining the fourth value as the second position parameter.

According to one or more embodiments of the present disclosure, the present disclosure provides a method for adjusting interface layout, wherein the function control includes a top adjustment control; determining a target position parameter corresponding to the object to be adjusted in response to an operation on the function control comprises: determining a first preset parameter as the target position parameter in response to a trigger operation on the top adjustment control, wherein the first preset parameter is a position parameter corresponding to a top area in the display interface.

According to one or more embodiments of the present disclosure, the present disclosure provides a method for adjusting interface layout, wherein the function control includes a top cancel control; determining a target position parameter corresponding to the object to be adjusted in response to an operation on the function control comprises: determining a second preset parameter as the target position parameter in response to a trigger operation on the top cancel control, wherein the second preset parameter is a position parameter corresponding to the object to be adjusted in response to the top adjustment control being triggered for the last time.

According to one or more embodiments of the present disclosure, the present disclosure provides an apparatus for adjusting interface layout, comprising: a position adjustment area display module, configured to, in response to a selection operation on an object to be adjusted in a display interface, display a position adjustment area corresponding to the object to be adjusted; a target position parameter determination module, configured to determine a target position parameter in response to the operation on the position adjustment area; a position adjustment module, configured to adjust the object to be adjusted to a target position in the display interface based on the target position parameter.

According to one or more embodiments of the present disclosure, the present disclosure provides an apparatus for adjusting interface layout, wherein at least one function control is set in the position adjustment area; the target position parameter determination module is specifically configured to determine the corresponding target position parameter in response to an operation on the function control.

According to one or more embodiments of the present disclosure, the present disclosure provides an apparatus for adjusting interface layout, wherein the function control includes a forward adjustment control; the target position parameter determination module comprises: a forward adjustment control response unit, configured to subtract a preset value from a position parameter corresponding to the object to be adjusted to obtain a first value in response to a trigger operation on the forward adjustment control; a target position parameter determination unit configured to determine the first value as the target position parameter.

According to one or more embodiments of the present disclosure, the present disclosure provides an apparatus for adjusting interface layout, wherein the function control includes a backward adjustment control; the target position parameter determination module comprises: a backward adjustment control response unit, configured to add a preset value to a position parameter corresponding to the object to be adjusted to obtain a second value in response to a trigger operation on the backward adjustment control; a target position parameter determination unit configured to determine the second value as the target position parameter.

According to one or more embodiments of the present disclosure, the present disclosure provides an apparatus for adjusting interface layout, wherein the apparatus further comprises an operation prohibition setting module for setting the forward adjustment control corresponding to the object to be adjusted to an operation prohibition state in response to the object to be adjusted being at the top of the display interface; and set the backward adjustment control corresponding to the object to be adjusted to an operation prohibition state in response to the object to be adjusted being located at the last position of the display interface.

According to one or more embodiments of the present disclosure, the present disclosure provides an apparatus for adjusting interface layout, wherein the function control includes a parameter input control; the target position parameter determination module comprises: a parameter input control response unit configured to, in response to an input operation on the parameter input control, determine an input value corresponding to the input operation as the target position parameter.

According to one or more embodiments of the present disclosure, the present disclosure provides an apparatus for adjusting interface layout, wherein the target position parameter determination module further comprises a parameter display control response unit configured to display the parameter input control in response to a trigger operation on the parameter display control in the position adjustment area before obtaining the input parameter corresponding to the input operation in response to the input operation on the parameter input control.

According to one or more embodiments of the present disclosure, the present disclosure provides an apparatus for adjusting interface layout, wherein the target position parameter determination module further comprises a second position parameter determination unit configured to, after determining the input parameter corresponding to the input operation as the target position parameter, for an object corresponding to any first position parameter between the position parameter corresponding to the object to be adjusted and the target position parameter, process the first position parameter according to a preset processing mode to obtain a second position parameter; a position adjustment module further configured to adjust the object corresponding to the first position parameter to a position corresponding to the second position parameter in the display interface.

According to one or more embodiments of the present disclosure, the present disclosure provides an apparatus for adjusting interface layout, wherein the second position parameter determination unit is specifically configured to add one to the first position parameter to obtain a third value in response to the position parameter corresponding to the object to be adjusted being greater than the target position parameter, and determine the third value as the second position parameter; and subtract one from the first position parameter to obtain a fourth value in response to the position parameter corresponding to the object to be adjusted being smaller than the target position parameter, and determine the fourth value as the second position parameter.

According to one or more embodiments of the present disclosure, the present disclosure provides an apparatus for adjusting interface layout, wherein the function control includes a top adjustment control; the target position parameter determination module further comprises a top adjustment control response unit configured to determine a first preset parameter as the target position parameter in response to a trigger operation on the top adjustment control, wherein the first preset parameter is a position parameter corresponding to a top area in the display interface.

According to one or more embodiments of the present disclosure, the present disclosure provides an apparatus for adjusting interface layout, wherein the function control includes a top cancel control; the target position parameter determination module further comprises a top cancel control response unit configured to determine a second preset parameter as the target position parameter in response to a trigger operation on the top cancel control, wherein the second preset parameter is a position parameter corresponding to the object to be adjusted in response to the top adjustment control being triggered for the last time.

According to one or more embodiments of the present disclosure, the present disclosure provides an electronic device, comprising:
one or more processors;
a memory for storing one or more programs;
in response to the one or more programs being executed by the one or more processors, causing the one or more processors to implement any one of the methods for adjusting interface layout provided by the present disclosure.

According to one or more embodiments of the present disclosure, the present disclosure provides a computer-readable storage medium, on which a computer program is stored, which, when executed by a processor, implements any one of the methods for adjusting interface layout provided by the present disclosure.

The embodiment of the present disclosure also provides a computer program product comprising a computer program or instructions which, when executed by a processor, implement the method for adjusting interface layout as described above.

The embodiment of the present disclosure also provides a computer program comprising instructions that, when executed by a processor, cause the processor to execute the method for adjusting interface layout as described above.

The embodiment of the present disclosure provides a method and apparatus for adjusting interface layout, device, storage medium and program product. The method comprises the following steps: in response to a selection operation on an object to be adjusted in a display interface, displaying a position adjustment area corresponding to the object to be adjusted in the display interface; determining a target position parameter in response to an adjustment operation on the position adjustment area; adjusting the object to be adjusted to a target position corresponding to the target position parameter in the display interface based on the target position parameter. The embodiment of the present disclosure displays a position adjustment area after the selection operation on the object, and further adjusts the object to the target position based on the operation on the position adjustment area, that is, the position adjustment of the object is realized through the operation on the position adjustment area. The operation is convenient, and the adjustment of the position of the object can be realized anytime and anywhere.

It will be appreciated by those skilled in the art that the scope of disclosure of the present disclosure is not limited to the technical solutions formed by specific combinations of the above-described technical features, and should also encompass other technical solutions formed by any combination of the above-described technical features or equivalents thereof without departing from the concept of the present disclosure. For example, the technical solutions formed by the above features be replaced with (but not limited to) features having similar functions disclosed in the present disclosure.

Further, although operations are depicted in a particular order, this should not be understood as requiring such operations to be performed in the particular order shown or in sequential order. Under certain circumstances, multitasking and parallel processing may be advantageous. Likewise, although several specific implementation details are included in the above discussion, these should not be construed as limitations on the scope of the present disclosure. Certain features that are described in the context of a single embodiment can also be implemented in combination in the single embodiment. Conversely, various features that are described in the context of a single embodiment can also be implemented in multiple embodiments separately or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are disclosed as example forms for implementing the claims.

## Claims

1. A method for adjusting interface layout, comprising:
in response to a selection operation on an object to be adjusted in a display interface, displaying a position adjustment area corresponding to the object to be adjusted in the display interface;
determining a target position parameter in response to an adjustment operation on the position adjustment area; and
adjusting the object to be adjusted to a target position corresponding to the target position parameter in the display interface based on the target position parameter.

2. The method for adjusting interface layout according to claim 1, wherein:
at least one function control is set in the position adjustment area; and
the determining a target position parameter in response to an operation on the position adjustment area comprises:
determining the target position parameter corresponding to the object to be adjusted in response to an operation on the function control.

3. The method for adjusting interface layout according to claim 2, wherein:
the function control comprises a forward adjustment control; and
the determining a target position parameter corresponding to the object to be adjusted in response to an operation on the function control comprises:
in response to a trigger operation on the forward adjustment control, subtracting a preset value from a position parameter corresponding to the object to be adjusted to obtain a first value; and
determining the first value as the target position parameter.

4. The method for adjusting interface layout according to claim 2 or 3, wherein:
the function control comprises a backward adjustment control; and
the determining a target position parameter corresponding to the object to be adjusted in response to an operation on the function control comprises:
in response to a trigger operation on the backward adjustment control, adding a preset value to a position parameter corresponding to the object to be adjusted to obtain a second value; and
determining the second value as the target position parameter.

5. The method for adjusting interface layout according to claim 3 or 4, further comprising:
in response to determining the target position parameter, determining a target position parameter of an intermediate object, and adjusting the intermediate object to the target position parameter corresponding to the intermediate object, wherein the intermediate object is an object corresponding to any position parameter between the position parameter corresponding to the object to be adjusted and the target position parameter, and the intermediate object comprises an object corresponding to the target position parameter.

6. The method for adjusting interface layout according to any one of claims 3 to 5, further comprising:
in response to the object to be adjusted being located at the top of the display interface, setting the forward adjustment control corresponding to the object to be adjusted to an operation prohibition state; and
in response to the object to be adjusted being located at the last position of the display interface, setting the backward adjustment control corresponding to the object to be adjusted to an operation prohibition state.

7. The method for adjusting interface layout according to any one of claims 2 to 6, wherein:
the function control comprises a parameter input control; and
the determining a target position parameter corresponding to the object to be adjusted in response to an operation on the function control comprises:
in response to an input operation on the parameter input control, determining an input value corresponding to the input operation as the target position parameter.

8. The method for adjusting interface layout according to claim 7, further comprising:
before obtaining an input parameter corresponding to the input operation in response to an input operation on the parameter input control, displaying the parameter input control in response to a trigger operation on a parameter display control in the position adjustment area.

9. The method for adjusting interface layout according to claim 7 or 8, further comprising:
after determining an input parameter corresponding to the input operation as the target position parameter, for an object corresponding to any first position parameter between the position parameter corresponding to the object to be adjusted and the target position parameter, processing the first position parameter according to a preset processing mode to obtain a second position parameter; and
adjusting the object corresponding to the first position parameter to a position corresponding to the second position parameter in the display interface.

10. The method for adjusting interface layout according to claim 9, wherein processing the first position parameter according to a preset processing mode to obtain a second position parameter comprises:
in response to the position parameter corresponding to the object to be adjusted being greater than the target position parameter, adding one to the first position parameter to obtain a third value, and determining the third value as the second position parameter; and
in response to the position parameter corresponding to the object to be adjusted being smaller than the target position parameter, subtracting one from the first position parameter to obtain a fourth value, and determining the fourth value as the second position parameter.

11. The method for adjusting interface layout according to any one of claims 7 to 10, further comprising:
before determining an input value corresponding to the input operation as the target position parameter, determining whether the input value is greater than a maximum value of the parameter;
in response to the input value being greater than the maximum value of the parameter, displaying prompt information to prompt a user that the position parameter does not exist; and
in response to the input value being less than the maximum value of the parameter, determining the input value corresponding to the input operation as the target position parameter.

12. The method for adjusting interface layout according to any one of claims 2 to 11, wherein:
the function control comprises a top adjustment control; and
the determining a target position parameter corresponding to the object to be adjusted in response to an operation on the function control comprises:
determining a first preset parameter as the target position parameter in response to a trigger operation on the top adjustment control, wherein the first preset parameter is a position parameter corresponding to a top area in the display interface.

13. The method for adjusting interface layout according to claim 12, wherein:
the function control comprises a top cancel control; and
the determining a target position parameter corresponding to the object to be adjusted in response to an operation on the function control comprises:
determining a second preset parameter as the target position parameter in response to a trigger operation on the top cancel control, wherein the second preset parameter is a position parameter corresponding to the object to be adjusted in response to the top adjustment control being triggered for the last time.

14. The method for adjusting interface layout according to any one of claims 1 to 13, wherein the selection operation on the object to be adjusted in the display interface comprises at least one of a click operation, a touch operation or a hover operation.

15. An apparatus for adjusting interface layout, comprising:
a position adjustment area display module, configured to, in response to a selection operation on an object to be adjusted in a display interface, display a position adjustment area corresponding to the object to be adjusted;
a target position parameter determination module, configured to determine a target position parameter in response to an operation on the position adjustment area; and
a position adjustment module, configured to adjust the object to be adjusted to a target position in the display interface based on the target position parameter.

16. An electronic device comprising:
one or more processors;
a storage means for storing one or more programs;
in response to the one or more programs being executed by the one or more processors, causing the one or more processors to implement a method for adjusting interface layout according to any one of claims 1 to 14.

17. A computer-readable storage medium on which a computer program is stored that, when executed by a processor, implements a method for adjusting interface layout according to any one of claims 1 to 14.

18. A computer program product comprising computer programs or instructions which, when executed by a processor, implement a method for adjusting interface layout according to any one of claims 1 to 14.

19. A computer program comprising instructions which, when executed by a processor, cause the processor to perform the method for adjusting interface layout according to any one of claims 1 to 14.
